# EUROPEAN PATENT SPECIFICATION

(11) **EP 1 394 025 B1**
(45) Date of publication and mention of the grant of the patent: **27.07.2005**
(21) Application number: 03014134.5
(22) Date of filing: 24.06.2003
(51) Int. Cl.: B62J 1/00

(54) **Saddle for vehicles, in particular for racing bikes, mountain bikes, city bikes and the like**
Sattel für ein Fahrzeuge, insbesondere für Rennräder, Mountainbikes, Citybikes und dergleichen
Selle pour véhicules, en particulier pour vélos de course, tous terrains, urbains et similaires

(30) Priority: 28.08.2002 IT VI20020187
(43) Date of publication of application: 03.03.2004
(73) Proprietor: SELLE SAN MARCO DI GIRARDI COMM. LUIGI S.p.A., 36028 Rossano Veneto (Vicenza) (IT)
(72) Inventor: Girardi, Antonio, 36028 Rossano Veneto (IT)
(74) Representative: Bettello, Pietro, Dott. Ing.

(56) References cited:
- US-A- 3 549 441
- US-A- 4 694 924
- US-A- 5 356 205

## Description

The present finding concerns a saddle for vehicles, in particular for bicycles.

As is well known, there are on the market various types of saddle and each type has aesthetic and constructive characteristics which make it specific for a well defined type of vehicle.

In particular, saddles mounted on bicycles have different characteristics according to the type of bicycle: racing bike, mountain bike, city bike or others.

All types of saddle, in their most simple and schematic configuration, comprise an elongated rigid body, shaped so as to define two portions, a front tapered portion and a laterally widened rear portion.

The rigid body is made with a single piece usually obtained by injection moulding of plastic material, or else by sheet moulding or else, furthermore, by realising shells of noble fibre such as carbon, Kevlar and the like.

On the rigid body, which defines the shape and size of the saddle to make it as suitable as possible for the type of vehicle on which it is mounted, an upper padding is applied to make it more comfortable to use, in particular to sufficiently protect the parts of the body of the cyclist subjected to the greatest pressure, which are those situated at the prostate area.

On the lower part of the saddle a metal frame is applied which acts as an attachment to the frame of the vehicle.

To obtain greater comfort for the cyclist, saddles have been conceived which, with special constructive techniques, give the rigid body a certain degree of elasticity, reduce its weight and, for particular sporting uses, also generate forced circulation of the air which licks the rigid body itself.

From US-A-5356205 it is already known a bicycle saddle which comprises a rigid body, a soft part being applied at the top thereof and the frame for the attachment to the bicycle is applied at the bottom. This device has particular features that allow to obtain better ergonimics and confort with respect to those which can be obtained with the other similar devices.

The primary purpose of the present finding is to obtain a constructive embodiment of this saddle in order to achieve better results both for the user and for the manufacturer.

This is obtained by means of the solution according to the characterising part of the claim 1.

The constructive and functional characteristics of the finding are made clear through the description of a possible embodiment thereof, given only as a non-limiting example, with the help of the attached tables of drawings, where:
- fig. 1 (Tav. I) represents a perspective view of the saddle according to the finding;
- fig. 2 (Tav. II) represents an exploded perspective view of the components of the saddle according to fig. 1;
- fig. 3 (Tav. III) represents an elevated front view of the saddle according to figure 1;
- fig. 4 (Tav. IV) represents a plan view of the saddle according to fig. 1;
- fig. 5 (Tav. V) represents an elevated front view of the saddle, sectioned according to line V-V of fig. 4;
- fig. 6 represents an elevated front view of the saddle, sectioned according to line VI-VI of fig. 5;
- fig. 7 represents an elevated front view of the saddle, sectioned according to line VII-VII of fig. 5;
- fig. 8 (Tav. VI) represents an elevated front view of the saddle, sectioned according to line VIII-VIII of fig. 4;
- fig. 9 (Tav. VII) represents a view from below of the saddle according to fig. 1;
- fig. 10 (Tav. VIII) represents a diagram of the airflows which lick the saddle according to fig. 1.

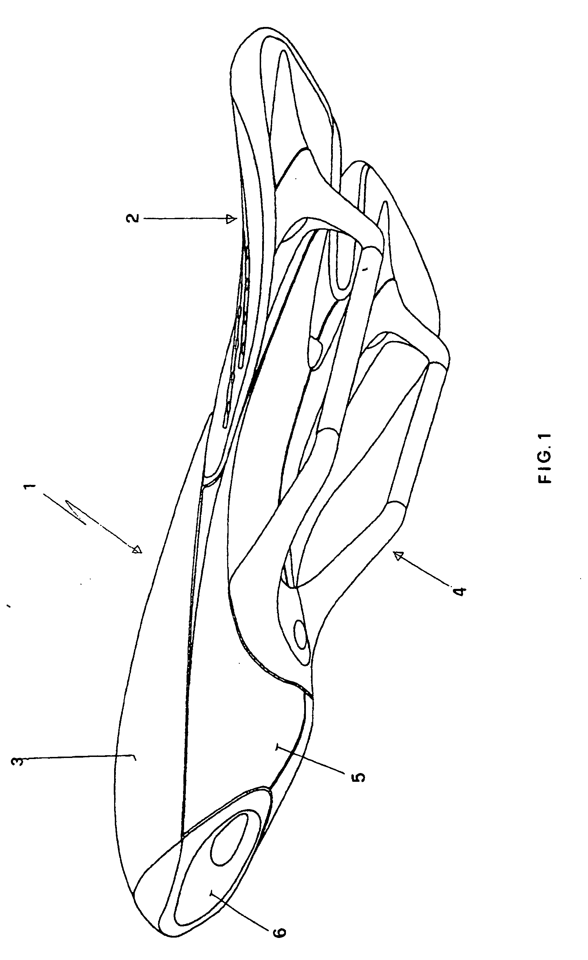

As can be seen in figs. 1; 2 and 3, the saddle according to the finding, wholly indicated with 1, is substantially made up of a rigid body 2, on top of which the soft part 3 is applied and on the bottom of which the frame 4 is applied.

The first characteristic of the finding foresees that at the bottom of the rigid body 2 a box-shaped cover 5 is applied, which engages all of the tapered front part and the central portion of the rear part of said rigid body.

The finding is completed with a front grill 6 which keeps the three components - the saddle (i.e. the rigid body), the soft upper part and the lower cover - joined together by clamping.

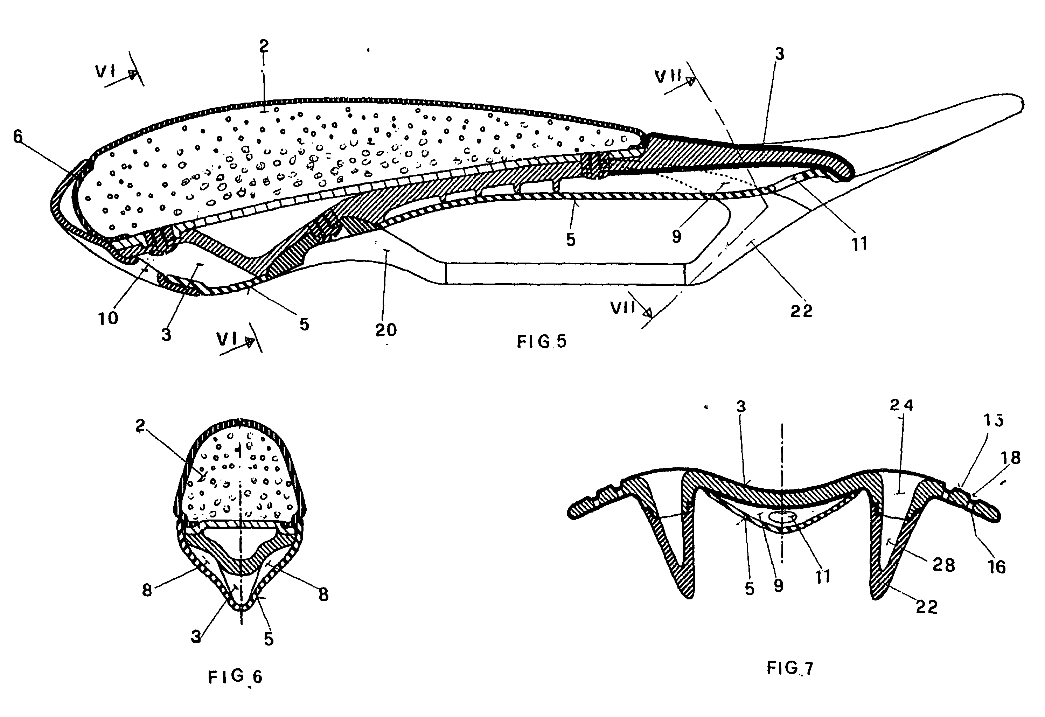

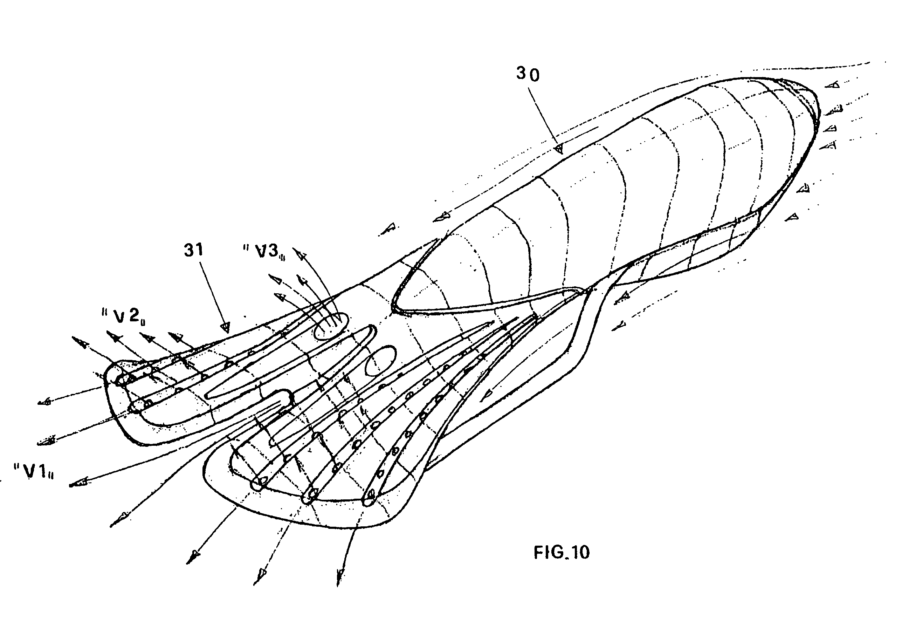

As can be seen in particular in figs. 5, 6, 7 and 10, the front portion 7 of the rigid body 2 and the cover 5 are shaped in such a way that the aforementioned cover 5 constitutes a fairing which defines two longitudinal channels 8 which flow together at the rear in a single channel 9 so as to allow the formation, when the vehicle is in movement, of a first airflow "V1", which enters through the hole 10, made on the front grill 6 and, after having licked the entire length of the tapered front part 11 of the rigid body itself, comes out from the hole 12 made in the rear end zone of the cover itself.

The cross section of the passage for the airflow "V1" gradually reduces from the entry hole 10 to the exit hole 12 to create the conditions of the "venturi effect" and thus to contribute, even if minimally, to the forward thrust of the vehicle.

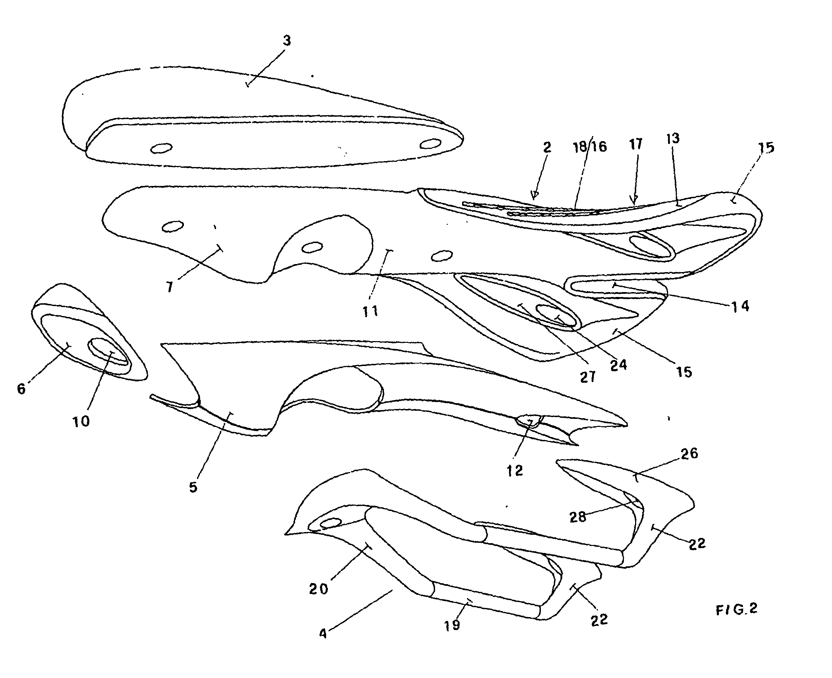

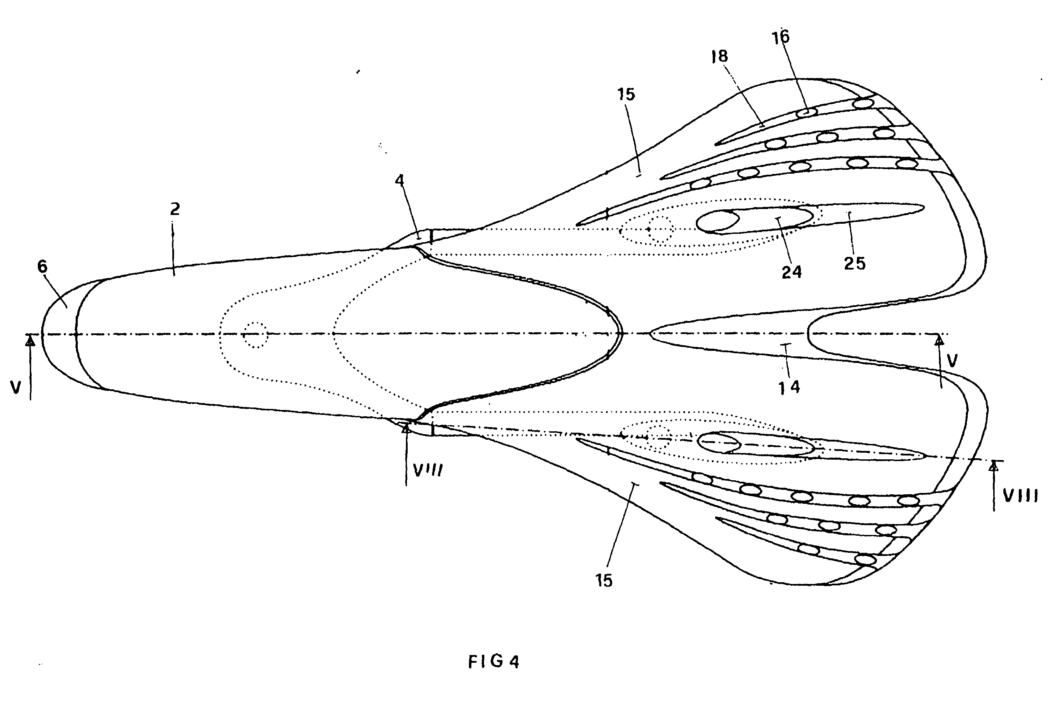

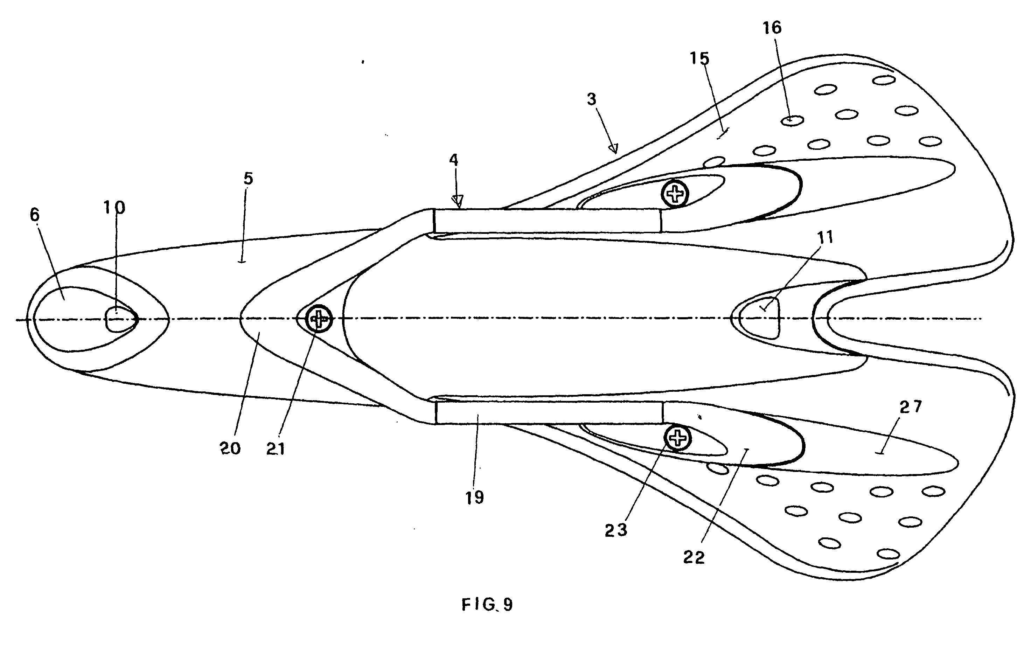

As can be seen in particular in figs. 2, 4, 7 and 9, the rear part 13 of the rigid body is not covered with the soft part 3 and is made up of a central rib 14, which is the prolongation of the tapered front part 7, equipped at the side with wings 15, with low thickness and equipped with a certain degree of elasticity so as to ensure a soft support for the prostate area of the cyclist.

On the wings 15 a plurality of through-holes 16 are formed, which are crossed by a second airflow "V2", from the bottom to the top, made up of the airflow "V1" coming out, under slight pressure, from the hole 12 of the cover 5 and the airflow which runs in the lower part of the saddle, more precisely the one which licks the outer surface of the cover 5 itself.

Moreover, the cover 5 has a suitable aerodynamic shape such as to give the airflow which runs below the rigid body a supporting effect in the rear zone, below the wings of the rigid body itself.

On the outer surface 17 of the rear part 13 of the rigid body, grooves 18 are foreseen which, connecting many through-holes 16, increase the ventilation effect onto the cyclist's backside.

As can be seen in fig. 2, a further characteristic of the finding concerns the configuration of the frame 4, which is made up of two small tubes 19 which support, at the front, a single front frame 20, connected through the attachment 21 to the rigid body and, at the rear, two separate frames 22, also connected through the attachments 23 thereto.

The four mutually removable elements, which constitute the frame 4, are preferably made from titanium. The frames are made by pressure die-casting whereas the small tubes are drawn from titanium wire or another material suitable for the purpose.

To further increase the ventilation of the saddle the finding foresees that the two rear frames 22 of the frame be shaped so as to generate a third airflow "V3", which comes out from through-recesses 24, associated with through-grooves 25, made on the outer surface 17 of the rigid body.

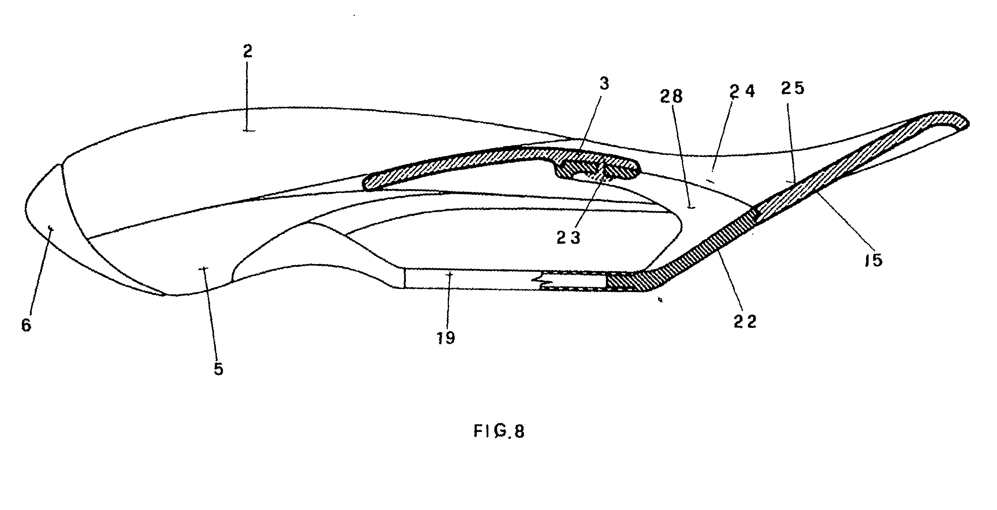

In detail, as can be seen in figs. 2, 4, 7 and 8, each of the two rear frames 22 consists of a hook-shaped body 26, which fixes into a corresponding seat 27 present on the lower part of the rigid body, in which a recess 28 is formed, open at the top at the through-recesses 24 of the rigid body so as to convey a portion of the airflow which runs below the saddle into the upper part thereof.

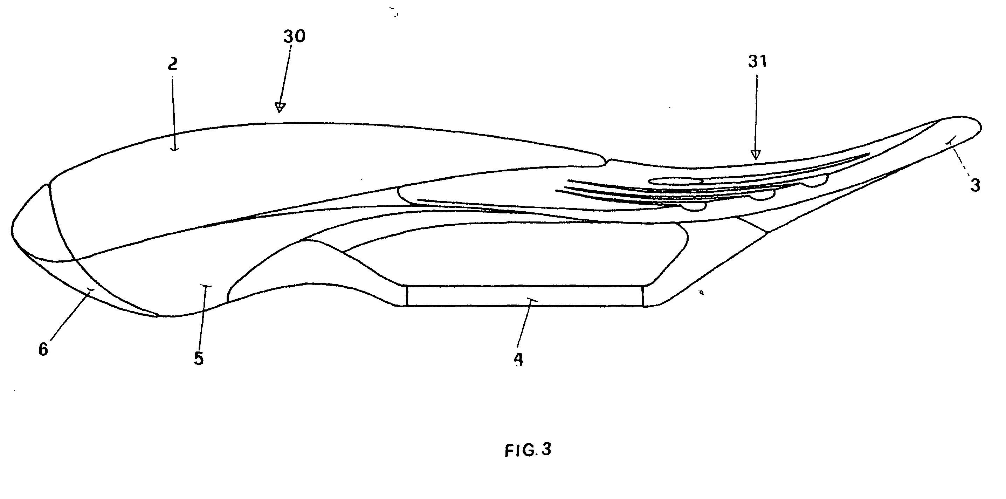

Observing figs. 1 and 3 a further novelty characteristic of the saddle according to the finding can be seen, which differentiates it from known saddles, since it has a general configuration in which there is a predominant tapered front part 30, which associates with a substantially flat rear part of low thickness 31.

In greater detail, it is characterised in that the tapered front part 30 has a reverse profile and where the point has a lanceolate configuration in the vertical direction.

Finally, to further increase the comfort of the backside, the finding foresees that the body of the saddle be totally or partially coated with a soft, opaque and/or transparent material.

Of course, both aesthetic and productive embodiments which are different to the one described are also possible, in relation to the type of use of the saddle, without for this reason departing from the scope of the claims, defined hereafter.

## Claims

1. SADDLE FOR VEHICLES, IN PARTICULAR FOR RACING BIKES, MOUNTAIN BIKES, CITYBIKES AND THE LIKE, of the type which comprises a rigid body (2) on which a soft part (3) is applied at the top and a frame (4) for the attachment to the vehicle is applied at the bottom, wherein at the bottom of the rigid body (2) a box-shaped cover (5) is applied, which engages all of the tapered front part and the central portion of the rear part of said rigid body, the saddle having a general configuration in which there is a predominant tapered front part which associates with a substantially flat rear part of low thickness, the saddle being **characterised in that** it foresees a front grill (6) which keeps the rigid body (2), the soft upper part (3) and the box-shaped cover (5) box-shaped joined together by clamping.

2. SADDLE FOR VEHICLES, according to claim 1, **characterised in that** the front portion (7) of the rigid body (2) and the cover (5) are shaped in such a way that the aforementioned cover constitutes a fairing which defines two longitudinal channels (8) which flow together at the rear in a single channel (9) so as to allow the formation, when the vehicle is in movement, of a first airflow (V1), which enters through a hole (10), made on the front grill and, after having licked the entire length of the tapered front part (11) of the rigid body itself, comes out from the hole (12) made in the rear end zone of the cover itself.

3. SADDLE FOR VEHICLES, according to claim 2, **characterised in that** the cross section of the passage for the airflow (V1) gradually reduces from the entry hole (10) to the exit hole (12) to create the conditions for the so-called "venturi effect".

4. SADDLE FOR VEHICLES, according to one or more of the previous claims, **characterised in that** the rear part (13) of the rigid body is not coated with the soft part (3).

5. SADDLE FOR VEHICLES, according to claim 4, **characterised in that** the rear part (13) of the rigid body (2) is made up of a central rib (14), which is the prolongation of the tapered front part (7), said rib being equipped at the side with wings (15), with low thickness and equipped with a certain degree of elasticity so as to ensure a soft support for the prostate area of the cyclist.

6. SADDLE FOR VEHICLES, according to claim 5, **characterised in that** on the wings (15) a plurality of through-holes (16) are formed, which are crossed by an airflow (V2), from the bottom to the top, made up of the airflow (V1) coming out, under slight pressure, from the rear hole (12) of the cover (5) and the airflow which runs in the lower part of the saddle, more precisely the one which licks the outer surface of the cover itself.

7. SADDLE FOR VEHICLES, according to one or more of the previous claims, **characterised in that** on the outer surface (17) of the rear part (13) of the rigid body (2), grooves (18) are foreseen which, connecting many through-holes (16), increase the ventilation effect onto the cyclist's backside.

8. SADDLE FOR VEHICLES, according to one or more of the previous claims, **characterised in that** the frame (4) is made up of two small tubes (19) which support, at the front, a single front frame (20), connected through the attachment (21) to the rigid body and, at the rear, two separate frames (22), also connected through the attachments (23) thereto.

9. SADDLE FOR VEHICLES, according to claim 8, **characterised in that** each of the two rear frames (22) consists of a hook-shaped body (26), which fixes into a corresponding seat (27) present on the lower part of the rigid body.

10. SADDLE FOR VEHICLES, according to claim 9, **characterised in that** on the body (26) of each of the two rear frames (2) a recess (28) is formed, open at the top at the through-recesses (24) of the rigid body, so as to convey a portion of the airflow which runs below the saddle into the upper part thereof, at the wings (15).

11. SADDLE FOR VEHICLES, according to claim 7 and one or more of the following claims, **characterised in that** the four elements which constitute the frame (4) are removable from each other.

12. SADDLE FOR VEHICLES, according to claim 11, **characterised in that** the four mutually removable elements, which constitute the frame (4), are made from titanium, the frames are made by pressure die-casting or by moulding, through injection and/or co-injection, and/or over-injection and/or successive cast moulding, whereas the small tubes are drawn from titanium wire or another material suitable for the purpose.

13. SADDLE FOR VEHICLES, according to one or more of the previous claims, **characterised in that** it is totally or partially coated with a film of soft, opaque and/or transparent material, which increases the comfort for the backside.

## Patentansprüche

1. Sattel für Fahrzeuge, insbesondere für Rennräder, Mountainbikes, Citybikes und dergleichen, mit einem starren Korpus (2), auf dessen Oberseite ein weiches Teilstück (3) aufgebracht ist, und unter dem ein Rahmen (4) zur Verbindung mit dem Fahrzeug angeordnet ist, wobei am Boden des starren Korpus (2) eine kastenförmige Abdeckung (5) vorgesehen ist, welche den gesamten konisch zulaufenden vorderen Teil und den Mittelabschnitt des hinteren Teils des starren Korpus untergreift, wobei der Sattel im wesentlichen so ausgebildet ist, dass ein vorherrschender, konisch zulaufender vorderer Teil gebildet ist, der mit einem im wesentlichen flachen hinteren Teil geringer Dicke zusammenwirkt, wobei der Sattel **dadurch gekennzeichnet ist, dass** er ein Frontgitter (6) vorsieht, welches den starren Korpus (2), den weichen oberen Teil (3) und die kastenförmige Abdeckung (5) durch Klemmverbindung zusammenhält.

2. Sattel für Fahrzeuge nach Anspruch 1, **dadurch gekennzeichnet, dass** der vordere Abschnitt (7) des starren Korpus (2) und die Abdeckung (5) derart geformt sind, dass die Abdeckung eine Verkleidung bildet, welche zwei Längskanäle (8) definiert, die hinten in einen einzigen Kanal (9) einmünden, so dass, wenn sich das Fahrzeug in Bewegung befindet, ein erster Luftstrom (V1) gebildet wird, der durch ein im Frontgitter befindliches Loch (10) eintritt, und der, nachdem er die gesamte Länge des konisch zulaufenden Teils (11) des starren Korpus durchströmt hat, aus dem im hinteren Endbereich der Abdeckung befindlichen Loch (12) heraustritt.

3. Sattel für Fahrzeuge nach Anspruch 2, **dadurch gekennzeichnet, dass** sich der Querschnitt der Passage für den Luftstrom (V1) graduell von dem Eintrittsloch (10) zum Austrittsloch (12) reduziert, um die Bedingungen für den sogenannten "Venturi-Effekt" zu schaffen.

4. Sattel für Fahrzeuge nach einem oder mehreren der vorhergehenden Ansprüche, **dadurch gekennzeichnet, dass** der hintere Teil (13) des starren Korpus nicht mit dem weichen Teil (3) überzogen ist.

5. Sattel für Fahrzeuge nach Anspruch 4, **dadurch gekennzeichnet, dass** der hintere Teil (13) des starren Korpus (2) aus einer Mittelrippe (14) besteht, die die Verlängerung des konisch zulaufenden vorderen Teils (7) darstellt, wobei die Rippe seitlich mit Flügeln (15) geringer Dicke versehen ist und einem gewissen Grad an Elastizität, um eine weiche Auflage für den Prostatabereich des Radfahrers zu gewährleisten.

6. Sattel für Fahrzeuge nach Anspruch 5, **dadurch gekennzeichnet, dass** in den Seitenflügeln (15) eine Vielzahl von Löchern (16) ausgebildet sind, die von unten nach oben von einem Luftstrom (V2) gekreuzt werden, der sich aus dem Luftstrom (V1), welcher unter leichtem Druck aus dem hinteren Loch (12) der Abdeckung (5) austritt und dem Luftstrom, der in dem unteren Teil des Sattels strömt, genauer gesagt, derjenige, welcher die Außenfläche der Abdeckung selbst umstreicht, zusammensetzt.

7. Sattel für Fahrzeuge nach einem oder mehreren der vorhergehenden Ansprüche, **dadurch gekennzeichnet, dass** an der Außenfläche (17) des hinteren Teils (13) des starren Korpus (2) Rillen (18) vorgesehen sind, weiche viele Löcher (16) verbinden und **dadurch** den Ventilationseffekt auf das Hinterteil des Radfahrers verstärken.

8. Sattel für Fahrzeuge nach einem oder mehreren der vorhergehenden Ansprüche, **dadurch gekennzeichnet, dass** der Rahmen (4) aus zwei kleinen Rohren (19) besteht, welche vorne einen einzelnen Frontrahmen (20), der durch das Verbindungsteil (21) mit dem starren Korpus verbunden ist und hinten zwei separate Rahmen (22) tragen, weiche ebenfalls durch die Verbindungsteile (23) mit diesem verbunden sind.

9. Sattel für Fahrzeuge nach Anspruch 8, **dadurch gekennzeichnet, dass** jeder der beiden hinteren Rahmen (22) aus einem hakenförmigen Körper (26) besteht, der in einen entsprechenden Sitz (27) am unteren Teil des starren Korpus eingepasst ist.

10. Sattel für Fahrzeuge nach Anspruch 9, **dadurch gekennzeichnet, dass** sich im Körper (26) jedes der beiden hinteren Rahmen (2) eine Aussparung (28) befindet, die zu den Durchgangs-Aussparungen (24) des starren Körpers offen ist, so dass ein Teil des Luftstroms, welcher unterhalb des Sattels strömt, im Bereich der Flügel (15) in dessen oberen Teil gefördert wird.

11. Sattel für Fahrzeuge nach Anspruch 7 und einem oder mehreren der folgenden Ansprüche, **dadurch gekennzeichnet, dass** die vier Elemente, welche den Rahmen (4) bilden, voneinander lösbar sind.

12. Sattel für Fahrzeuge nach Anspruch 11, **dadurch gekennzeichnet, dass** die vier voneinander lösbaren Elemente, welche den Rahmen (4) bilden, aus Titan bestehen, und dass die Rahmen im Druckgussverfahren oder Gießverfahren durch Einspritzung oder Ko-Einspritzung und/oder Über-Einspritzung und/oder aufeinanderfolgenden Formguss hergestellt sind, während die kleinen Rohre aus Titandraht oder einem anderen, für diesen Zweck geeigneten Material, gezogen werden.

13. Sattel für Fahrzeuge nach einem oder mehreren der vorhergehenden Ansprüche, **dadurch gekennzeichnet, dass** er ganz oder teilweise mit einem Film aus weichem, opakem und/oder transparentem Material beschichtet ist, welches den Komfort für das Hinterteil verbessert.

## Revendications

1. Selle pour véhicules, en particulier pour des vélos de course, des vélos tous-terrains, des vélos de ville et analogues, du type qui comprend un corps rigide (2) sur lequel une partie souple (3) est appliquée à la partie supérieure et un cadre (4) pour la fixation au véhicule est appliqué à la partie inférieure, dans lequel à la partie inférieure du corps rigide (2) est monté un capot en forme de boîte (5), qui vient en prise avec l'ensemble de la partie avant de forme rétrécie et la partie centrale de la partie arrière dudit corps rigide, la selle possédant une configuration générale, dans laquelle il est prévu une partie avant prépondérante de forme rétrécie, qui est associée à une partie arrière sensiblement plate de faible épaisseur, la selle étant **caractérisée en ce qu'**elle comporte une grille avant (6) qui maintient le corps rigide (2), la partie supérieure souple (3) et le capot en forme de boîte (5) réunis ensemble par serrage.

2. Selle pour véhicules selon la revendication 1, **caractérisée en ce que** la partie avant (7) du corps rigide (2) et le capot (5) sont conformés de telle sorte que le capot mentionné précédemment constitue un carénage qui définit deux canaux longitudinaux (8) qui se rejoignent, à l'arrière, en un canal unique (9) de manière à permettre la formation, lorsque le véhicule se déplace, d'un premier écoulement d'air (V1) qui pénètre par un trou (10) formé au niveau de la grille avant et, après avoir longé, sur toute sa longueur, la partie avant rétrécie (11) du corps rigide lui-même, sort du trou (12) formé dans la zone d'extrémité arrière du capot lui-même.

3. Selle pour véhicules selon la revendication 2, **caractérisée en ce que** la section transversale du passage pour l'écoulement d'air (V1) diminue graduellement depuis le trou d'entrée (10) en direction du trou de sortie (12) pour créer les conditions pour ce qu'on appelle "effet venturi".

4. Selle pour véhicules selon une ou plusieurs des revendications précédentes, **caractérisée en ce que** la partie arrière (13) du corps rigide n'est pas recouverte par la partie souple (3).

5. Selle pour véhicules selon la revendication 4, **caractérisée en ce que** la partie arrière (13) du corps rigide (2) est formée par une nervure centrale (14), qui est le prolongement de la partie avant rétrécie (7), ladite nervure étant équipée, sur le côté, d'ailes (15) possédant une faible épaisseur et pourvues d'un certain degré d'élasticité de manière à garantir un support souple de la zone de la prostate du cycliste.

6. Selle pour véhicules selon la revendication 5, **caractérisée en ce que** sur les ailes (15) sont formés une pluralité de trous traversants (16), qui sont traversés par un écoulement d'air (V2) s'étendant de bas en haut, formé par l'écoulement d'air (V1) qui sort, sous une légère pression, du trou arrière (12) du capot (5) et par l'écoulement d'air qui circule dans la partie inférieure de la selle, plus précisément l'écoulement d'air qui longe la surface extérieure du capot lui-même.

7. Selle pour véhicules selon une ou plusieurs des revendications précédentes, **caractérisé en ce que** sur la surface extérieure (17) de la partie arrière (13) du corps rigide (2) sont prévues des rainures (18) qui, en raccordant de nombreux trous traversants (16), augmentent l'effet de ventilation sur le postérieur du cycliste.

8. Selle pour véhicules selon une ou plusieurs des revendications précédentes, **caractérisée en ce que** le cadre (4) est formé de deux petits tubes (19) qui supportent, sur le côté avant, un cadre avant unique (20), raccordé au moyen de l'élément de fixation (21) au corps rigide et, sur l'arrière, deux cadres séparés (22), également raccordés au corps au moyen des éléments de fixation (23).

9. Selle pour véhicules selon la revendication 8, **caractérisée en ce que** chacun des deux cadres arrière (22) est constitué par un corps en forme de crochet (26), qui est fixé dans un siège correspondant (27) présent sur la partie inférieure du corps rigide.

10. Selle pour véhicules selon la revendication 9, **caractérisée en ce que** sur le corps (26) de chacun des deux cadres arrière (2) est formé un renfoncement (28), qui est ouvert dans sa partie supérieure au niveau des renfoncements traversants (24) du corps rigide, de manière à convoyer une partie de l'écoulement d'air qui circule au-dessous de la selle dans la partie supérieure de cette dernière, au niveau des ailes (15).

11. Selle pour véhicules selon la revendication 7 et une ou plusieurs des revendications suivantes, **caractérisée en ce que** les quatre éléments qui constituent le cadre (4) sont amovibles les uns par rapport aux autres.

12. Selle pour véhicules selon la revendication 11, **caractérisée en ce que** les quatre éléments mutuellement amovibles, qui constituent le cadre (4), sont réalisés en titane, que les cadres sont réalisés par coulée en coquilles sous pression ou par moulage, par injection et/ou par co-injection et/ou par injection recouvrante et/ou moulage à coulées successives, alors que les petits tubes sont formés par étirage à partir d'un fil de titane ou en un autre matériau approprié à cet effet.

13. Selle pour véhicules selon une ou plusieurs des revendications précédentes, **caractérisée en ce qu'**elle est totalement ou partiellement recouverte par un film d'un matériau souple, opaque et/ou transparent qui augmente le confort pour le postérieur.
